# EUROPÄISCHE PATENTSCHRIFT

(11) **EP 0 385 324 B1**
(45) Veröffentlichungstag und Bekanntmachung des Hinweises auf die Patenterteilung: **20.10.1993**
(21) Anmeldenummer: 90103649.1
(22) Anmeldetag: 26.02.1990
(51) Int. Cl.: B24D 5/12, B24B 27/06, B28D 5/02, B23D 59/00

(54) **Verfahren zum Zersägen von stabförmigen Werkstücken in Scheiben mittels Innenlochsäge, sowie Innenlochsägen zu seiner Durchführung**
Method for cutting rod-shaped work pieces into discs using an internal hole saw, and internal hole saw for this purpose
Procédé de sciage en tranches de pièces en forme de lingots au moyen d'une scie à tronçonner intérieure, ainsi que scie à tronçonner intérieure pour sa mise en oeuvre

(30) Priorität: 27.02.1989 DE 3906091
(43) Veröffentlichungstag der Anmeldung: 05.09.1990
(73) Patentinhaber: Wacker-Chemitronic Gesellschaft für Elektronik-Grundstoffe mbH, D-84489 Burghausen (DE)
(72) Erfinder: Malcok, Hanifi, Dipl.-Ing., D-8263 Burghausen (DE); Zwirglmaier, Hermann, Dipl.-Ing., D-8261 Teising (DE)

(56) Entgegenhaltungen:
- US-A- 3 039 235
- US-A- 3 992 614
- IBM TECHNICAL DISCLOSURE BULLETIN, Band 25, Nr. 5, Oktober 1982, Seiten 2283-2284, New York, US, P.R. CARUFE et al.: "System for controlling sawbladeexcursions during the slicing of silicon crystals".
- PATENT ABSTRACTS OF JAPAN, Band 7, Nr. 24 (M-189)[1169], 29. Januar 1983;& JP-A-57 178 660 (HITACHI SEISAKUSHO K.K.) 02-11-1982
- PATENT ABSTRACTS OF JAPAN, Band 7, Nr. 12 (M-186)[1157], 19. Januar 1983;& JP-A-57 168 854 (TOUKIYOU SEIMITSU K.K.) 18-10-1982

## Beschreibung

Die Erfindung betrifft ein Verfahren zum Zersägen von stabförmigen Werkstücken in Scheiben mittels Innenlochsäge, bei welchem der mit Schneidkörnern besetzte Innenrand eines rotierenden, an seinem Außenumfang in ein Spannsystem eingespannten Sägeblattes radial durch das mit Hilfe einer Werkstückhalterung in der Schnittposition gehaltene Werkstück geführt wird, wobei beim Sägevorgang die Abweichung des Sägeblattes aus einer Sollposition erfaßt und beeinflußt wird, sowie eine Innenlochsäge gemäß dem Oberbegriff des Anspruchs 7 (siehe DE-A-3640645).

Zum präzisen Zerteilen von stabförmigen Werkstücken, beispielsweise aus Glas, Quarz, keramischem oder oxidischem Material wie etwa Rubin oder Gallium-Gadolinium-Granat, aber auch Verbindungs- oder Elementhalbleitermaterialien wie etwa Galliumarsenid oder Indiumphosphid sowie insbesondere Silicium oder Germanium in Scheiben werden in den meisten Fällen Innenlochsägen eingesetzt, da sich damit die oftmals strengen Anforderungen an die geometrische Qualität der erhaltenen Produkte besonders gut erfüllen lassen. Als Sägeblatt dienen dabei kreisrunde Dünnblechscheiben, die konzentrisch zum Außenumfang eine zentrale kreisförmige Bohrung, das Innenloch, aufweisen. Dessen Umfangsbereich ist mit einem Schneidbelag versehen, welcher in der Regel aus in eine Bindungsmatrix eingebetteten Hartstoffkörnern besteht.

Für das Zersägen von Stäben aus Halbleitermaterial wie etwa Silicium in dünne Scheiben von ca. 0.1 bis 1 mm Dicke, wie sie z.B. bei der Herstellung von elektronischen oder Leistungsbauelementen eingesetzt werden, haben sich beispielsweise Schneidbeläge mit tropfenförmigem Querschnitt bewährt, die aus in eine Metall-, vorzugsweise Nickelmatrix eingebetteten Diamant- oder Bornitridkörnern bestehen.

Das Sägeblatt wird an seinem Außenumfang in ein Spannsystem, welches beispielsweise gemäß den in der DE-PS 34 42 730, der US-PS 3,175,548, der US-PS 3,039,235 oder der DE-PS 28 41 653 beschriebenen Ausführungsformen gestaltet sein kann, eingespannt und sitzt möglichst koaxial und rotationssymmetrisch auf dem in der Regel becherartig aufgeweiteten Rotor der Sägemaschine. Das zu zersägende Werkstück, z.B. ein Siliciumstab, wird im allgemeinen mittels einer Adaptiereinrichtung in der Werkstückhalterung befestigt und über einen Zustellmechanismus in die vorgesehene Schnittposition gebracht und dort gehalten.

Beim Sägevorgang wird das rotierende Sägeblatt und das Werkstück einer Relativbewegung unterworfen, durch welche sich die Schneidkante radial durch das Werkstück hindurcharbeitet, bis schließlich die gewünschte Scheibe abgetrennt ist. Bei den bekannten Innenlochsägen werden dafür verschiedene Varianten eingesetzt, bei denen beispielsweise das Werkstück die Schnittbewegung bei fester Position des Sägeblattes ausführt, oder das Sägeblatt durch das in fester Position befindliche Werkstück bewegt wird, wobei das Werkstück sich sowohl in horizontaler als auch in vertikaler Lage befinden kann, mit dem entsprechend vertikal bzw. horizontal aufgespannten Sägeblatt.

Allgemein wirken bei jeder dieser genannten Varianten neben der radial gerichteten Hauptschnittkraft beim Trennvorgang jedoch auf das Sägeblatt zusätzliche axial, d.h. senkrecht zur Sägeblattebene gerichtete Kräfte, die seinen Lauf im Werkstück beeinflussen und zu Abweichungen von der gewünschten Schnittlinie führen können. Als mögliche Ursachen kommen beispielsweise Unregelmäßigkeiten des Schneidbelages wie etwa ungleichmäßige Abnutzung, unterschiedliche Belegungsdichte mit Schneidkörnern, ungleichmäßige Schneidkorngeometrien oder unterschiedliche Ablagerung von abgetragenem Material auf der Schneidkante in Frage, aber auch unregelmäßige Druckverhältnisse im Sägespalt oder Verlagerungen des Werkstückes oder des Sägemaschinenrotors.

Als Folge dieser Auslenkung des Sägeblattes zeigen sich am erhaltenen Produkt, der Scheibe, Abweichungen von der eigentlich gewünschten Form. Wird beispielsweise das Sägeblatt bei zwei aufeinanderfolgenden Sägevorgängen jeweils gleichgerichtet und gleich weit aus der Ideallage ausgelenkt, so sind die durch diese beiden Schnitte erzeugten Oberflächen einer Scheibe nicht ideal eben, sondern parallel gekrümmt; die Scheibe hat zwar keine Dickenvariation, sondern einen sog. "warp", eine Krümmung. Sind die Auslenkungen gegensinnig, so ergeben sich Scheiben mit einer Dickenvariation. Für die Charakterisierung der Scheiben im Hinblick auf solche Geometriefehler sind standardisierte Testverfahren entwickelt worden, wie etwa das Verfahren gemäß der ASTM-Norm F 657-80, nach dem sich die Werte für den "warp" und/oder "bow" einer Scheibe ermitteln lassen. Einwandfreie Scheiben dürfen dabei nur innerhalb enger Toleranzgrenzen von einer vorgegebenen Sollgeometrie abweichen; dies gilt insbesondere für Halbleiterscheiben zum Einsatz bei der Herstellung elektronischer, insbesondere hoch integrierter Bauelemente und vor allem bei photolithographischen Prozessen, bei denen an die geometrische Präzision besonders hohe Anforderungen gestellt werden.

Bei dem Verfahren gemäß der DE-A-36 40 645 bzw. der entsprechenden US-Anmeldung mit Serial Number 122,369 wird daher während des Sägevorganges der Schnittverlauf mit Hilfe von Meßeinrichtungen überwacht und der Abweichung des Sägeblattes dadurch entgegengewirkt, daß ein Fluid auf zumindest eine Seitenfläche des Sägeblattes vor dem Eintreten in den Sägespalt aufgebracht wird. Dabei ändern sich die Druckverhältnisse im Sägespalt und es wird eine der auslenkenden Kraft entgegengerichtete Kraftkomponente erzeugt, so daß die Sollschnittlinie genauer eingehalten werden kann. Allerdings ist dieses Verfahren apparativ und regeltechnisch aufwendig, zumal diese fluiddynamisch erzeugten Regelkräfte erfahrungsgemäß verhältnismäßig schwach sind und darüber hinaus erst dann ausreichend wirksam werden, wenn eine bestimmte Eindringtiefe des Sägeblattes im zu sägenden Material erreicht ist.

Die Aufgabe der Erfindung bestand darin, ein Verfahren anzugeben, welches regeltechnisch und apparativ weniger aufwendig ist und die Einhaltung strenger Anforderungen an die geometrische Qualität der erhaltenen Scheiben auch bei großen Scheibendurchmessern erlaubt. Dieses Verfahren sollte sich weiterhin ohne aufwendige Umrüstung bei bestehenden Innenlochsägen einsetzen lassen und gegebenenfalls nicht nur die Herstellung von ebenen Scheiben, sondern auch solchen mit einer bestimmten Durchbiegung ("bow") einer oder beider Oberflächen gestatten. Ferner sollten zu seiner Durchführung geeignete Innenlochsägen angegeben werden.

Gelöst wird die Aufgabe durch ein Verfahren der eingangs genannten Art, welches dadurch gekennzeichnet ist, daß die Abweichung durch eine translatorische axiale Relativbewegung zwischen Spannsystem und Werkstück zumindest teilweise ausgeglichen wird.

Weiterhin wird die Aufgabe durch eine Innenlochsäge gemäß dem Anspruch 7 gelöst.

Letztlich wird bei diesem Verfahren also die Relativlage der Sägeblattspannebene, d.h. mithin der von der Spannkante des Spannsystems aufgespannten gedachten Ebene, und des Werkstückes zueinander in axialer Richtung, mit der Drehachse des Spannsystems als Bezugsachse, kontrolliert verändert, bis die Istlage am Schnittort von der Sollage allenfalls um einen noch als zulässig erachteten Toleranzzwert abweicht.

Grundsätzlich kann die translatorische axiale Relativbewegung durch Nachführung des Werkstückes, durch Nachführung des Sägeblattes oder durch eine Kombination dieser beiden Nachführbewegungen erzielt werden. In den meisten Fällen ist es ausreichend, wenn alternativ eine der beiden Möglichkeiten angewendet wird, so daß auf die grundsätzlich zwar nicht ausgeschlossene, aber regeltechnisch und apparativ aufwendigere Kombination verzichtet werden kann.

Allgemein erfordert jegliche Art der Nachführung eine genügend steife Aufspannung des Werkstückes, um das während des Sägevorganges auftretende Spiel möglichst gering zu halten. Diese Forderung wird in der Regel von den üblichen Werkstücktischen in ausreichendem Maße erfüllt, da auch bei den herkömmlichen Innenlochsägeverfahren eine genaue und möglichst wenig variierende Werkstückposition unerläßlich ist.

Des weiteren ist eine möglichst genaue Erfassung des Schnittverlaufes, letztlich also eine möglichst exakte Beobachtung des Weges der Schnittkante durch das Werkstück bzw. der Auslenkung des Sägeblattes während des Schnittes eine wichtige Voraussetzung für die Durchführung des erfindungsgemäßen Verfahrens. Meßeinheiten, mit deren Hilfe sich jeweils die Istposition des rotierenden Sägeblattes im Werkstück erfassen läßt, sind bekannt und lassen sich bei dem Verfahren einsetzen, sofern sie eine genügend genaue Messung gestatten. Dabei kommen sowohl solche Meßsensoren in Frage, die die direkte Erfassung der jeweiligen Istposition ermöglichen, dh. bei denen das Meßsignal durch die entstehende Scheibe hindurch erzeugt wird, als auch solche, bei denen das Meßsignal an einer oder mehreren Positionen außerhalb des Eingriffsbereiches des Sägeblattes in das Werkstück aufgenommen wird und somit indirekt auf die Istposition im Werkstück geschlossen werden kann. Geeignete Meßeinheiten sind bekannt und im Handel erhältlich; Beispiele sind etwa Wirbelstromsensoren, mit deren Hilfe Abstandsänderungen zwischen Sensor und Sägeblatt über induzierte Ströme registriert und in Meßsignale umgewandelt werden können, oder auch magnetische Sensoren, die die mit dem Abstand wechselnde Stärke eines magnetischen Feldes beispielsweise über die daraus resultierenden Anziehungskräfte registrieren und in Signale umsetzen. Grundsätzlich ist auch der Einsatz von licht- oder infrarotoptischen Sensoren nicht ausgeschlossen. Bei der Auswahl des entsprechenden Meßsystems ist gegebenenfalls zu berücksichtigen, daß auch das zu zersägenden Material die Messung beeinflussen kann.

Allgemein ist jedoch festzuhalten, daß die erzielten Ergebnisse um so besser sind, je genauer und zuverlässiger die Erfassung der Istposition des Sägeblattes mit dem jeweils ausgewählten Meßsensor gelingt.

Wenn im Verlauf des Trennvorganges die ermittelte Istposition um mehr als einen in der Regel von Fall zu Fall nach Maßgabe der für die Scheiben geforderten Spezifikationen festgelegten, noch tolerierbaren Grenzwert von der Sollposition abweicht, wird diese Abweichung in der erfindungsgemäßen Weise zumindest teilweise, d.h so weit ausgeglichen, bis sich die Istposition wieder in dem die Sollposition umgebenden zulässigen Toleranzbereich befindet. Die Genauigkeit, mit der dem vorgegebenen Wert gefolgt wird, läßt sich dabei so weit steigern, daß maximale Abweichungen um ca. ± 1µm und weniger eingehalten werden können. Als Ausgangswert, der auch als Basis für den zweckmäßig vor jedem Sägeschnitt vorgenommenen Nullabgleich zwischen Soll- und Istposition dienen kann, wird vorteilhaft der dem ungestörten Sägeblattlauf entsprechende Meßwert verwendet, der vor dem Kontakt des frei rotierenden Sägeblattes mit dem Werkstück gemessen wird.

Eine festgestellte Abweichung in Richtung Scheibe oder Stab kann dann gemäß einer möglichen Verfahrensvariante dadurch zumindest teilweise ausgeglichen werden, daß das Werkstück dieser Abweichung durch eine gleichgerichtete Bewegung nachgeführt wird, bis die Istposition des Sägeblattes der Sollposition in der gewüschten Genauigkeit angeglichen ist. Da für diese Nachführbewegung in der Regel Translationen um wenige µm ausreichend sind, kommen für ihre Ausführung nur solche Stellglieder in Frage, die eine ausreichend genaue Steuerung gestatten und sich durch ein ausreichend dynamisches Regelverhalten auszeichnen. Grundsätzlich sind dafür vielerlei Systeme denkbar, wie etwa auf hydraulischer, pneumatischer, elektromotorischer oder mechanischer Basis, sofern sie die erforderliche hochgenaue Positionierung ermöglichen. Bevorzugt werden aus Gründen der erzielbaren Wegauflösung und Verfahrgeschwindigkeiten piezoelektrische Antriebseinheiten verwendet, bei denen die Translationsbewegung über eine Änderung der angelegten Spannung bewirkt und gesteuert werden kann. Solche Einheiten sind im Handel erhältlich; sie werden zweckmäßig so angebracht, daß sie auf die Werkstückhalterung einwirken, jedoch die Zustellung des Werkstückes vor jedem Sägevorgang unbeeinflußt lassen.

Die zweite grundsätzliche Nachführungsmöglichkeit besteht darin, daß das Sägeblattspannsystem entgegen der Auslenkungsrichtung des Sägeblattes so lange verschoben wird, bis dessen Istposition im gewünschten Maße mit der Sollposition in Übereinstimmung gebracht ist. Dies kann beispielsweise dadurch geschehen, daß die gesamte Rotorspindellagerung im Maschinenbett bewegt wird, aber auch, indem der axiale Lagerspalt verändert wird, oder indem die Rotorspindel in der Lagerung axial verschoben wird.

Eine überraschend einfache und im Rahmen der Erfindung bevorzugte Möglichkeit liegt darin, während des Sägevorganges nach Maßgabe der Abweichung die Drehzahl, mit welcher das Sägeblatt rotiert, zu verändern. Diese Drehzahländerung bewirkt, über die Variation der Fliehkräfte, eine geringfügige Verformung des Spannsystems sowie ggf. auch des dieses tragenden Rotors, durch welche sich das Spannsystem mit dem Sägeblatt minimal in axialer Richtung verlagern läßt. Eine mit einer Aufweitung des Rotors verbundene Drehzahlsteigerung läßt dabei das Sägeblatt in Richtung auf den Rotor und vom Werkstück weg wandern, während eine Verlangsamung der Drehzahl und Verengung des Rotors die entgegengesetzte Bewegung zur Folge hat. Wird also eine Auslenkung des Sägeblattes von der Sollposition in Richtung auf die entstehende Scheibe hin beobachtet, so kann diese Abweichung durch eine Erniedrigung der Drehzahl kompensiert werden. Gleichermaßen kann eine Auslenkung in Richtung Werkstück durch Erhöhung der Drehzahl wieder ausgeglichen werden.

Diese Methode hat den Vorteil, daß sie besonders leicht beherrschbar ist und sich ohne großen Aufwand an bestehenden Maschinen anwenden läßt, zumal diese in der Regel ohnehin über Möglichkeiten zur Regelung der Drehzahl verfügen oder leicht damit auszurüsten sind. Grundsätzlich ist bei solchen Geräten auch eine Verfahrensführung von Hand möglich, sofern ein geeignetes Meßsystem vorhanden ist. Bevorzugt wird jedoch das Verfahren rechnergesteuert durchgeführt, wobei im vorliegenden Fall lediglich über ein zwischengeschaltetes Regelglied der gemessene Istwert mit dem vorgegebenen Sollwert verglichen und die daraus sich ergebende Regelgröße in einen Steuerimpuls für die Drehzahlregelung umgesetzt werden muß.

Vorteilhaft wird auch bei den anderen genannten Verfahrensvarianten die Regelung nicht von Hand, sondern über Rechnersteuerung vorgenommen. Dabei werden in analoger Weise dann die durch den Abgleich der Soll- und der Istposition erhaltenen Meßsignale in die translatorische axiale Relativbewegung steuernde Regelgrößen umgesetzt, nach deren Maßgabe dann entsprechende Verschiebungen des Werkstückes, des Spannsystems oder eine Kombination dieser beiden Bewegungsmöglichkeiten über die dafür vorgesehenen Ausführungsorgane ausgeführt werden. Grundsätzlich sind auch Ausführungsformen des Verfahrens denkbar, bei denen zusätzlich weitere Regelmöglichkeiten angewendet werden, wie beispielsweise eine Steuerung des Sägeblattes mittels fluiddynamischer Kräfte gemäß der DE-A-36 40 645. Auch ein periodisches Nachschärfen des Sägeblattes kann vorgenommen werden, wenn es sich durch die Regelung nicht mehr im vorgegebenen Toleranzbereich halten läßt. Dabei wurde gefunden, daß das erfindungsgemäße Verfahren weniger Schärfeingriffe erfordert und damit gegenüber herkömmlichen Verfahren auch höhere Sägeblattstandzeiten ermöglicht.

Das erfindungsgemäße Verfahren sowie die zu seiner Durchführung geeigneten Innenlochsägen gestatten es damit, Scheiben insbesondere aus Halbleitermaterial mit ungewöhnlich hoher geometrischer Präzision zu sägen. Dabei können nicht nur günstige Werte für die Dickenvariation und die Krümmung ("warp") erzielt werden. Es ist auch möglich, Scheiben mit definierter einseitiger Krümmung ("bow") zu erhalten, wobei insbesondere auch gezielt solche Scheiben abgetrennt werden können, bei denen die konvexe oder konkave Seite zum Werkstück zeigt (sog. "positiver" oder negativer bow"). Ein erheblicher Vorteil ergibt sich daraus, daß das Sägeblatt sich beim Regeleingriff nicht in der gegenüber axialen Kräften empfindlichen Mittellage befindet, sondern in einer demgegenüber stabileren ausgelenkten, quasi vorgespannten Position. Dadurch wird eine zuverlässigere und genauere Sägeblattführung erleichtert, was sich letztlich in höherer Schnittpräzision niederschlägt.

Nachstehend wird die Erfindung an Hand von Ausführungsbeispielen näher erläutert.

### Beispiel 1:

Eine handelsübliche Innenlochsäge war mit luftgelagertem Rotor und daran befestigtem Spannsystem ausgestattet, in welches über eine Spannkante durch Verschraubung am Außenrand ein Sägeblatt aus gewalztem Stahlblech mit ca. 86 cm Außendurchmesser und ca. 30 cm Innenlochdurchmesser eingespannt war. Der Innenumfang war mit einem Schneidbelag aus in eine Nickelmatrix eingebetteten Diamantkörnern versehen.

Ein einkristalliner Siliciumstab (Durchmesser ca. 15 cm, Länge ca. 40 cm) war auf eine als Sägehilfsmittel dienende Kohleschneidleiste aufgeklebt und mit Hilfe einer Adaptiervorrichtung möglichst spielfrei und starr in die auf dem Werkstücktisch vorgesehene Werkstückhalterung eingepaßt, mittels derer er in die jeweils vorgesehene Schnittposition verfahren werden konnte.

Zusätzlich verfügte die Innenlochsägemaschine über ein Meßsystem, welches aus zwei in Höhe der Schneidkante und seitlich des Werkstückes im Eintritts- und Austrittsbereich des Sägeblattes angeordneten Wirbelstromsensoren bestand; der Spalt zwischen Sensor und Sägeblatt betrug jeweils etwa 2 mm. Damit konnte mit einer Empfindlichkeit von ± 1 µm indirekt über die außen gemessene Lageänderung des Sägeblattes während des Sägevorganges die im Werkstück aufgetretene Abweichung der Istlage von der Sollage ermittelt werden.

Die ermittelten Meßsignale wurden von einem Rechner aufgenommen, und nach Maßgabe der Abweichung von der Sollposition in die Drehzahl regelnde Steuerimpulse umgesetzt, welche eine Steigerung oder Verlangsamung der Umdrehung des Rotors bewirkten. In Vorversuchen war ermittelt worden, daß bei der vorliegenden Anordnung eine Änderung der Drehzahl um ca. 100 UPM einer Verlagerung der Sägeblattspannebene um ca. 9 µm entsprach, und zwar in Richtung Werkstück bei Verlangsamung, in Richtung Scheibe bei Steigerung. Im vorliegenden Fall wurde die Drehzahl jeweils so lange geändert, bis die Istposition des Sägeblattes mit der Sollposition innerhalb der Meßgenauigkeit übereinstimmte.

Vor jedem Sägevorgang wurde das Meßsystem "genullt", d.h. die Drehzahl des über dem bereits in die Schnittposition zugestellten Werkstück befindlichen Sägeblattes wurde auf den Standardwert von ca. 1250 UPM eingestellt und der dabei bei ungestörter Rotation sich ergebende Abstand Sägeblatt/Sensor als Ausgangswert vom Rechner aufgenommen.

Durch die Vorschubeinrichtung wurde nun der Siliciumstab radial an die Schneidkante herangeführt und der eigentliche Trennvorgang begann, bei dem sich das Sägeblatt unter Zufuhr eines Kühlschmiermittels entsprechend der Vorschubbewegung nach und nach durch das Werkstück arbeitete, bis schließlich eine Scheibe abgetrennt war, welche mit Hilfe eines Abnehmers entnommen und in eine Aufnahmevorrichtung eingeführt wurde.

Zeigten die Sensoren während des Trennvorganges eine Abweichung des Sägeblattes aus der Sollage, in diesem Fall also der anfangs eingestellten Nullage, an, so wurde über den Rechner die Drehzahl des Rotors geändert, und zwar so, daß die dadurch verursachte Bewegung des Spannrahmens der Richtung der Sägeblattauslenkung entgegengesetzt war, und so lange, bis im Rahmen der Meßgenauigkeit keine Abweichung mehr zwischen Ist- und Sollposition festzustellen war. Diese Regelung wurde jeweils fortgeführt, bis die Scheibe abgetrennt war. Danach wurde erneut der Nullabgleich vorgenommen, und der nächste Sägevorgang konnte beginnen. Das Sägeblatt vor dem nächsten Schnitt wurde durch kurzzeitiges Sägen in ein hartes Material nachgeschärft, wenn jeweils innerhalb eines Sägevorganges die Drehzahl um mehr als 200 UPM geändert werden mußte, um die Abweichung noch auszugleichen.

Nach dieser Methode wurden mehrere Siliciumstäbe in insgesamt über 23 000 Scheiben mit einer Dicke von ca. 850 µm zersägt. Nach einer Reinigung wurde die Scheibenoberfläche mit Hilfe eines handelsüblichen Kontrollgerätes mittels einer berührungslos wirkenden kapazitiven Meßmethode auf ihre geometrische Qualität (bow bzw. warp) untersucht. Als aussagekräftigste Kenngröße wurde dabei für jede Scheibe der "warp" registriert, d.h die Abweichung der Scheibenoberfläche von einer sie begrenzenden idealen Mittellinie. Daraus läßt sich die Leistungsfähigkeit eines Sägeverfahrens oder einer Innenlochsäge z.B. an Hand der "warp"-Werte ermitteln, die statistisch von 97.5 % der erhaltenen Scheiben eingehalten oder unterschritten werden. Im vorliegenden Fall wurden die entsprechenden Werte ermittelt und festgehalten.

Zum Vergleich wurden die unter Produktionsbedingungen mit Hilfe des Standardprozesses beim Innenlochsägen von Stäben gleicher Größe erhaltenen "warp"-Werte herangezogen, die statistisch ebenfalls von 97.5 % der gleichen Anzahl Scheiben eingehalten oder unterschritten wurden. Dabei wurde ohne die erfindungsgemäße Regelung zum Ausgleich der Sägeblattabweichung gearbeitet, sondern nur das Sägeblatt nachgeschärft, wenn es beim Sägevorgang um mehr als den noch als zulässig erachteten Grenzwert aus seiner Ausgangsposition abwich.

Ein Vergleich der bei beiden Verfahren erhaltenen Daten ergab, daß der von 97.5% der Scheiben eingehaltene oder unterschrittene "warp"-Wert bei den Scheiben aus dem mit Hilfe der Drehzahl geregelten Sägeverfahren um etwa 10 µm unter dem der mit dem ungeregelten Standardprozeß erhaltenen lag. Dieser Standardwert wurde von allen Scheiben aus dem erstgenannten Verfahren erfüllt.

Bei diesem Verfahren waren auch um etwa 50% weniger Schärfeingriffe notwendig.

### Beispiel 2:

In einer weiteren Versuchsreihe zum Sägen von Siliciumstäben mit ca. 15 cm Durchmesser wurde eine Innenlochsägemaschine eingesetzt, die analog Beispiel 1 aufgebaut war, jedoch mit den folgenden Abänderungen: Die Werkstückhalterung war zusätzlich mit einer piezoelektrischen Antriebseinheit verbunden und gegenüber dieser vorgespannt, so daß durch eine Änderung der anliegenden Spannung das Werkstück minimale translatorische axiale Bewegungen auf das Sägeblatt zu oder von diesem weg ausführen konnte. Weiterhin war als Meßsensor ein Magnetsensor vorgesehen (wie z.B. in der deutschen Patentanmeldung mit dem Aktenzeichen P 38 26 698.9 beschrieben), der in Scheitelhöhe des Innenloches des Sägeblattes angebracht war. Aus dieser Position konnte während des Sägevorganges der Lauf des Sägeblattes diagonal durch die entstehende Scheibe hindurch verfolgt werden. Abweichungen des Sägeblattes aus der als Sollposition dem Sägevorgang zugrundegelegten, analog Beispiel 1 jeweils vor jedem Sägeschnitt bei ungestörtem Sägeblatt abgeglichenen Nullage wurden über die vom Sensor gelieferten Meßsignale von einem Rechner erfaßt und in Steuersignale umgesetzt, welche eine Änderung der an der piezoelektrischen Antriebseinheit anliegenden Spannung und damit eine Bewegung des Werkstückes in der gewünschten Richtung bewirkten.

Der eigentliche Trennvorgang wurde in der in Beispiel 1 beschriebenen Art und Weise durchgeführt; die Drehzahl des Sägeblattes war auf 1250 UPM eingestellt. Zeigte der Sensor (Meßgenauigkeit ca. ± 1 µm) eine Abweichung des Sägeblattes, wurde über die Steuerung jeweils eine der Abweichung gleichgerichtete translatorische axiale Bewegung des Werkstückes ausgeführt, bis innerhalb der Meßgenauigkeit die Position des Werkstückes an die Position des Sägeblattes angeglichen war. Mußte das Werkstück jeweils um mehr als 25 µm nachgeführt werden, um die Abweichung auszugleichen, wurde das Sägeblatt vor dem nachfolgenden Sägevorgang durch kurzzeitiges Sägen in ein hartes Material nachgeschärft

Nach dieser Methode wurden weitere 2000 Scheiben mit einer Dicke von ca. 800 µm gesägt und nach einer Reinigung einer Messung des "warp" unterzogen. Die statistische Auswertung ergab, daß der von 97.5% der Scheiben eingehaltene oder unterschrittene "warp"-Wert dem mit der Drehzahlregelung erzielten entsprach und damit ebenfalls um etwa 10 µm besser war als der bei dem konventionellen ungeregelten Sägeverfahren im Beispiel 1 erhaltene Vergleichswert.

## Patentansprüche

1. Verfahren zum Zersägen von stabförmigen Werkstücken in Scheiben mittels Innenlochsäge, bei welchem der mit Schneidkörnern besetzte Innenrand eines rotierenden, an seinem Außenumfang in ein Spannsystem eingespannten Sägeblattes radial durch das mit Hilfe einer Werkstückhalterung in der Schnittposition gehaltene Werkstück geführt wird, wobei beim Sägevorgang die Abweichung der Istposition des Sägeblattes bezüglich einer Sollposition erfaßt und beeinflußt wird, dadurch gekennzeichnet, daß die Abweichung durch eine translatorische axiale Relativbewegung zwischen Spannsystem und Werkstück zumindest teilweise ausgeglichen wird.

2. Verfahren nach Anspruch 1, dadurch gekennzeichnet, daß die Abweichung des Sägeblattes von der Sollposition bis auf einen als zulässig erachteten Toleranzwert ausgeglichen wird.

3. Verfahren nach den Ansprüchen 1 oder 2, dadurch gekennzeichnet, daß die Abweichung durch eine translatorische axiale Bewegung des Spannsystems ausgeglichen wird.

4. Verfahren nach Anspruch 3, dadurch gekennzeichnet, daß die translatorische axiale Bewegung des Spannsystems durch eine Änderung der Drehzahl bewirkt wird.

5. Verfahren nach den Ansprüchen 1 oder 2, dadurch gekennzeichnet, daß die Abweichung durch eine translatorische axiale Bewegung des Werkstückes ausgeglichen wird.

6. Verfahren nach Anspruch 5, dadurch gekennzeichnet, daß die translatorische axiale Bewegung des Werkstückes durch eine piezoelektrische Antriebseinheit bewirkt wird.

7. Innenlochsäge zum Zerteilen stabförmiger Werkstücke in dünne Scheiben, ausgestattet mit einer Meßeinrichtung und einer Stelleinrichtung, wobei die Meßeinrichtung beim Sägevorgang die Abweichung der Istposition des rotierenden Sägeblattes bezüglich einer Sollposition erfaßt und die Stelleinrichtung auf die Istposition nach Maßgabe der festgestellten Abweichung korrigierend einwirkt, dadurch gekennzeichnet, daß
die Stelleinrichtung eine piezoelektrische Antriebseinheit umfaßt, die das Werkstück in eine translatorische axiale Bewegung versetzt, oder Mittel umfaßt, die die Drehzahl des Sägeblattes ändern.

## Claims

1. Method of sawing bar-shaped workpieces into slices by means of an annular saw, in which the inner margin, set with cutting grains, of a rotating saw blade clamped into a clamping system at its outer periphery is guided radially through the workpiece held in the cutting position by means of a work-holding device, the deviation of the actual position of the saw blade from a nominal position being detected and influenced during the sawing operation, characterised in that the deviation is at least partly compensated by a translatory axial relative movement between clamping system and workpiece.

2. Method according to Claim 1, characterised in that the deviation of the saw blade from the nominal position is compen-sated up to a tolerance value deemed to be permissible.

3. Method according to Claim 1 or 2, characterised in that the deviation is compensated by a translatory axial movement of the clamping system.

4. Method according to Claim 3, characterised in that the translatory axial movement of the clamping system is effected by a change in the rotational speed.

5. Method according to Claim 1 or 2, characterised in that the deviation is compensated by a translatory axial movement of the workpiece.

6. Method according to Claim 5, characterised in that the translatory axial movement of the workpiece is effected by a piezoelectric drive unit.

7. Annular saw for dividing bar-shaped workpieces into thin slices, equipped with a measuring device and a regulating device, the measuring device detecting the deviation of the actual position of the rotating saw blade from a nominal position during the sawing operation, and the regulating device acting in such a way as to correct the actual position in accordance with the deviation found, characterised in that the regulating device comprises a piezoelectric drive unit which sets the workpiece in a translatory axial movement or comprises means which change the rotational speed of the saw blade.

## Revendications

1. Procédé pour scier sous forme de tranches des pièces en forme de barres au moyen d'une scie à trou intérieur, selon lequel le bord intérieur, pourvu de coins de coupe d'une lame de scie rotative, serrée sur sa périphérie extérieure dans un système de serrage, est guidé radialement par la pièce retenue à l'aide d'un dispositif de retenue de pièce dans la position de coupe, auquel cas lors de l'opération de sciage, on détecte l'écart entre la position réelle de la lame de scie et une position de consigne et on agit sur cet écart, caractérisé en ce que l'écart est compensé au moins partiellement par un mouvement axial relatif de translation entre le système de serrage et la pièce.

2. Procédé selon la revendication 1, caractérisé en ce que l'écart entre la lame de scie et la position de consigne est compensé à une valeur de tolérance près, considérée comme admissible.

3. Procédé selon la revendication 1 ou 2, caractérisé en ce que l'écart est compensé au moyen d'un mouvement axial de translation du système de serrage.

4. Procédé selon la revendication 3, caractérisé en ce que le mouvement axial de translation du système de serrage est obtenu au moyen d'une modification de la vitesse de rotation.

5. Procédé selon la revendication 1 ou 2, caractérisé en ce que l'écart est compensé au moyen d'un mouvement axial de translation de la pièce.

6. Procédé selon la revendication 5, caractérisé en ce que le mouvement axial de translation de la pièce est obtenu au moyen d'une unité d'entraînement piézoélectrique.

7. Scie à trou intérieur servant à diviser des pièces en forme de barres en forme de tranches minces, équipée d'un dispositif de mesure et d'un dispositif de réglage, et dans laquelle le dispositif de mesure détecte l'écart entre la position réelle de la lame de scie rotative et une position de consigne, lors de l'opération de sciage, et le dispositif de réglage agit de façon corrective sur la position réelle en fonction de l'écart déterminé, caractérisée en ce que
le dispositif de réglage comprend une unité d'entraînement piézoélectrique, qui déplace la pièce selon un mouvement axial de translation, ou comprend des moyens qui modifient la vitesse de rotation de la lame de scie.
